# EUROPEAN PATENT APPLICATION

(11) **EP 1 462 910 A2**
(43) Date of publication of application: **29.09.2004**
(21) Application number: 04007461.9
(22) Date of filing: 26.03.2004
(51) Int. Cl.: G06F 1/00

(54) **Terminal device and program**

(30) Priority: 28.03.2003 JP 2003091294
(71) Applicant: NTT DoCoMo, Inc., Tokyo 100-6150 (JP)
(72) Inventor: Tsuda, Masayuki,c/o Intell. Property Dpt, Chiyoda-ku Tokyo 100-6150 (JP); Asai, Mao,c/o Intell. Property Dpt, Chiyoda-ku Tokyo 100-6150 (JP); Watanabe, Nobuyuki,c/o Intell. Property Dpt., Chiyoda-ku Tokyo 100-6150 (JP); Oi, Tatsuro,c/o Intellectual Property Dpt., Chiyoda-ku Tokyo 100-6150 (JP); Hattori, Yasunori,c/o Intellectual Property Dpt., Chiyoda-ku Tokyo 100-6150 (JP); Nishida, Masakazu,c/o Intellectual Property Dpt., Chiyoda-ku Tokyo 100-6150 (JP); Naruse, Naoki,c/o Intellectual Property Dpt., Chiyoda-ku Tokyo 100-6150 (JP); Ichikawa, Yuichi,c/o Intellectual Property Dpt., Chiyoda-ku Tokyo 100-6150 (JP); Tomioka, Atsuki,c/o Intellectual Property Dpt., Chiyoda-ku Tokyo 100-6150 (JP); Takeshita, Masato,c/o Intellectual Property Dpt., Chiyoda-ku Tokyo 100-6150 (JP); Yamada, Kazuhiro,c/o Intellectual Property Dpt., Chiyoda-ku Tokyo 100-6150 (JP); Washio, Satoshi,c/o Intellectual Property Dpt., Chiyoda-ku Tokyo 100-6150 (JP); Kamiya, Dai,c/o Intellectual Property Dpt., Chiyoda-ku Tokyo 100-6150 (JP); Yamane, Naoki,c/o Intellectual Property Dpt., Chiyoda-ku Tokyo 100-6150 (JP); Murakami, Keiichi,c/o Intellectual Property Dpt., Chiyoda-ku Tokyo 100-6150 (JP)
(74) Representative: HOFFMANN - EITLE

(57) **Abstract**

In a terminal device, when instruction code is executed in accordance with an application program, it is determined whether the instruction code is instruction code whose execution is restricted (SB1) in the terminal device. Then, when it is determined that there is instruction code whose execution is restricted, and at least some data stored in the terminal device will be accessed due to the execution of the instruction code, execution of the instruction code is prevented (SB5).

## Description

### FIELD OF THE INVENTION

The present invention relates to technology for ensuring security of data stored in a terminal device, and to protecting user privacy.

### RELATED ART

Terminal devices, such as mobile phones or personal computers (referred to as PCs hereafter) having a program executing function, are widespread. A user can use various applications such as games and schedulers, by causing an application program to be run on this type of terminal device. These types of program are supplied either by writing to non-volatile storage of the terminal device before purchase of the terminal device, or by simply providing the application program and having the user install the program in the terminal device after purchase. In the following, the former is called a "native application program", while the latter is called a "non-native application program". An example of a non-native application program is an application program provided via the Internet, or an application program provided stored in a computer readable storage medium such as a CD-ROM (Compact Disk-Read Only Memory). Users can freely add or change functions of a terminal device by installing non-native application programs according to their needs.

Generally, application programs cause functions required by a user to be run on the terminal device, and so are beneficial to the user. However, in cases where there is bad faith with the provider of an application program (content provider, hereafter called "CP"), there is a possibility that a user will expect disadvantages as a result of executing the application program. Specifically, situations arise where important data stored in the terminal device (for example, a user's private information) is arbitrarily read out during the course of application program execution, and transmitted to the CP. With native application programs, for example, it is confirmed by the manufacturer of a terminal device that this type of situation does not occur due to product inspection at the time of product delivery. Conversely, with non-native application programs, this type of confirmation is not necessarily carried out. That is, with non-native application programs, a user may expect to be inconvenienced by executing the application program.

To avoid such inconvenience for a user, it has been considered to prevent the use of non-native application programs, and to allow the use of only native application programs. However, if use of non-native application programs is prevented, the user will not be able to freely add or change the functions of the terminal device according to their needs, which is extremely inconvenient. A technique for avoiding inconvenience for a user during the course of execution of a non-native application program, while allowing use of a non-native application program, is disclosed in Japanese patent laid-open publication No. 2002-245012.

With the technique disclosed in Japanese patent laid-open publication No. 2002-245012, provision of a program is carried out by providing objects that logically integrate data and programs for processing the data. A user who registers to use this type of program is bound by a contract allowing only the use of a program together with resources (hardware resources such as memory, and software resources such as data stored in memory) required when executing the program. In this way, by pre-limiting resources that can be used when executing a program, use of other resources is prevented during the execution of the program, and security of other resources is assured. In the following description, programs integrated with such data will be called "methods".

As described above, according to the method disclosed in Japanese patent laid-open publication No. 2002-245012, by preventing user access to important data stored in the terminal device 10 during execution of a non-native application program, it is possible to run the non-native application program while ensuring security of the important data.

However, if resources that can be used during execution of a non-native application program are limited unnecessarily, design freedom at the time of designing the non-native application program is restricted. If design freedom is restricted in this way, then consequently, functions of the non-native application program will also be restricted. With non-native application programs being thus restricted, there is a problem that users may not be able to effectively use such programs.

### DISCLOSURE OF THE INVENTION

The present invention has been conceived in view of the above-described situation, and an object of the present invention is to provide a technique for ensuring security of important data stored in a terminal device, while enabling a non-native application program to use important data necessary for its execution.

To solve the above-described problems, the present invention provides a terminal device comprising: first storage means for storing data; execution means for executing instruction code in accordance with an application program; second storage means for storing data for specifying, from among instruction codes that can be executed by the execution means, instruction codes whose execution is restricted in the terminal device; determination means for determining whether an instruction code executed by the execution means in accordance with an application program is a restricted instruction code, based on a stored content of the second storage means; and prevention means for preventing execution of the instruction code by the execution means when it is determined by the determination means that execution of an instruction code is restricted, and at least some of the data would be accessed due to execution of the instruction code.

According to the terminal device, among instruction codes to be executed in accordance with an application program, if execution of an instruction code is restricted, and it is detected that data stored in the terminal device would be accessed due to execution of the instruction code, the instruction will not be executed.

Therefore, the present invention ensures security of important data stored in a terminal device, while enabling the use of resources to be used in a non-native application program.

Also, to solve the above-described problems, the present invention provides a program product for causing a computer device to store and restrict data for identifying instruction code whose execution is restricted, and to execute the steps of: executing instruction code in accordance with an application program; determining whether or not an instruction code executed by the execution means in accordance with an application program is a restricted instruction code, based on stored content of the computer; and preventing execution of the instruction code by the execution means when it is determined by the determination means that execution of an instruction code is restricted, and at least some of the data would be accessed due to execution of the instruction code.

The program product allows the computer device to restrict the execution of the instruction code whose execution is restricted in the computer device, in the case that at least some of the data would be accessed due to execution of the restricted instruction code.

### BRIEF DESCRIPTION OF THE DRAWINGS

Fig. 1 is a drawing showing a structural example of a communication system having a terminal device 10 in accordance with the present invention.
Fig. 2 shows an example of a telephone directory table stored in the terminal device 10.
Fig. 3 shows an example of a received call history table stored in the terminal device 10.
Fig. 4 is a flowchart showing flow of a received call notification process carried out by a terminal device 10 in accordance with a Java APP stored in the terminal device 10.
Fig. 5 shows an example of a screen format of a screen displayed on the terminal device 10.
Fig. 6 is a block diagram showing the configuration of the terminal device 10.
Fig. 7 shows one example of a data management table written to a volatile storage unit 651 of the terminal device 10.
Fig. 8 shows one example of a code management table stored in a non-volatile storage unit 652 of the terminal device 10.
Fig. 9 is a block diagram for describing a Java Runtime Environment built in to the terminal device 10.
Fig. 10 is a flow of a Java bytecode interpreter process carried out by a control unit 610 of the terminal device 10 in accordance with KVM.
Fig. 11 is a flowchart showing flow of a telephone directory data acquisition process carried out by a control unit 610 of the terminal device 10 in accordance with an X-String creation API .
Fig. 12 is a flowchart showing flow of a received call notification process carried out by a terminal device 10 in accordance with a Java APP stored in the terminal device 10.
Fig. 13 is a block diagram showing a structural example of a communication system in accordance with the second modification.
Fig. 14 is a flowchart showing flow of a Java bytecode interpreter process in accordance with the third modification.

### BEST MODE FOR CARRYING OUT THE INVENTION

Embodiments of the present invention will be described below, with reference to the drawings.

### A. Configuration

### A - 1. Configuration of communication system

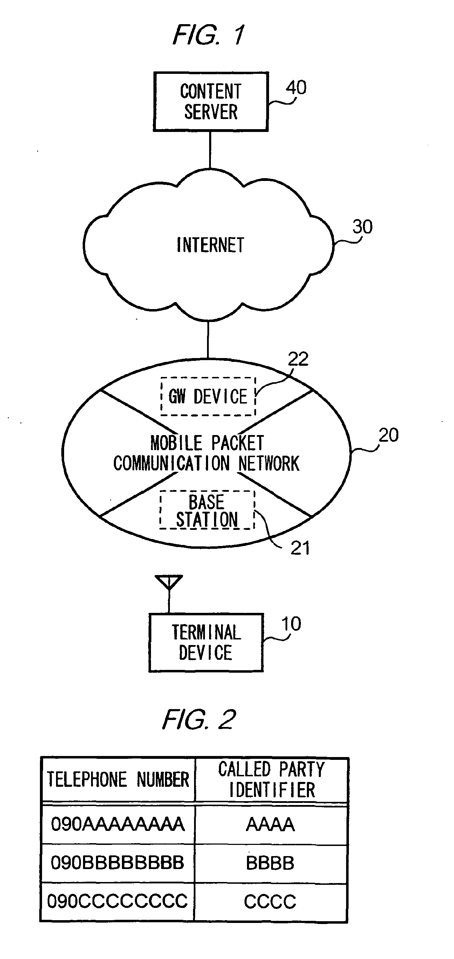

Fig. 1 is a drawing showing one example of the overall configuration of a communication system having a terminal device 10 in accordance with the present embodiment of the invention. A content server 40 shown in Fig. 1 has the same configuration as a conventional computer, and is connected to the Internet 30. This content server 40 stores an application program (hereafter referred to as an "APP") to be provided to the terminal device 10. The APP is written in Java (registered trademark) which is an object-orientated programming language, and is made up of Java bytecode capable of being interpreted and run in a Java Runtime Environment, which will be described later. In the following, this type of APP will be called a Java APP. The Java APP is a non-native APP provided to the terminal device 10 via the Internet 30.

A mobile packet communication network 20 provides packet communication services for a terminal device 10 contained in the mobile packet communication network 20. The mobile communication network 20 has a base station 21 and a gateway (hereafter called "GW") device 22. A number of base stations 21 are provided within the service area of the mobile packet communication network 20. A base station 21 forms a wireless cell having a fixed range (for example, a range of a 500 meter radius from the base station 21), and carries out wireless communication with a terminal device 10 within range of the wireless cell. The GW device 22 converts signals from both a communication protocol of the mobile packet communication network 20 and the communication protocol of the Internet 30. The GW device 22 functions as an interface between the mobile packet communication network 20 and the Internet 30.

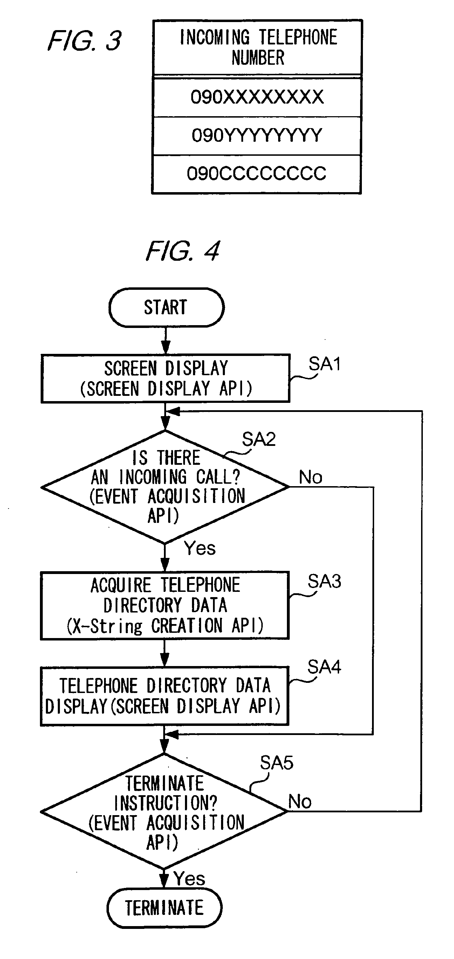

The terminal device 10 is a mobile telephone provided with a Java Runtime Environment. A user's private information, such as the telephone directory table shown in Fig. 2 or the received call history table shown in Fig. 3, is stored in the terminal device 10. As shown in fig. 2, telephone numbers of a user's contacts are stored in the telephone directory table in correspondence with identifiers (for example, the title or name of a called party: hereafter referred to as "called party identifier") for uniquely specifying the people to be called. In the following, a set of called party identifier and corresponding telephone number is called "telephone directory data". Also, as shown in Fig. 3, telephone numbers of devices of parties calling the terminal device 10 (hereafter referred to as "received telephone numbers") are stored in the received call history table in the order in which they are received. In this embodiment, as one example of a user's private information to be security protected, description will be given for data stored in a telephone directory table and received call history table, but it is, of course, also possible to store the user's own telephone number, or the user's bank account number and credit card numbers etc.

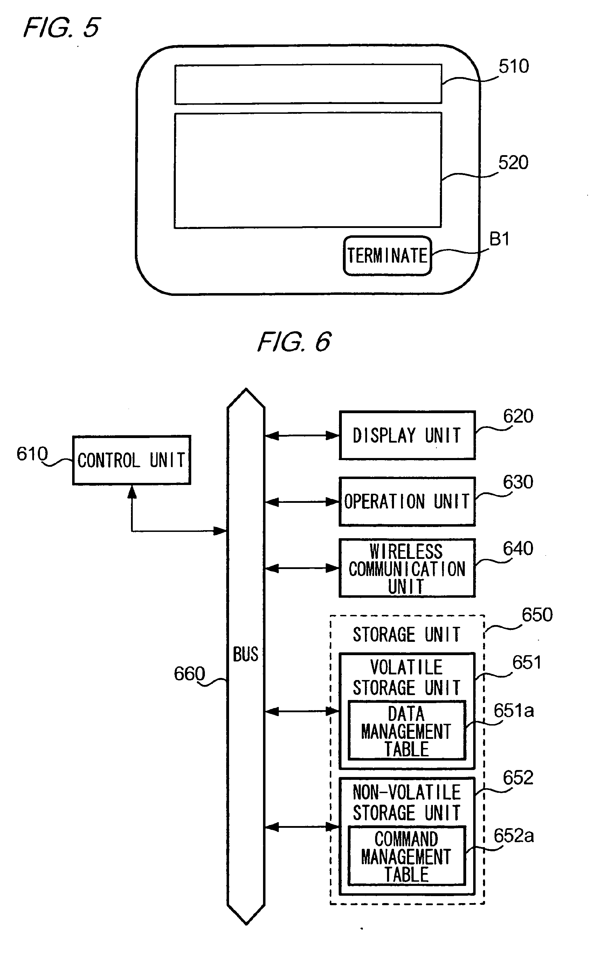

It is also possible for the terminal device 10 to download a Java APP from the content server 40 via the mobile packet communication network 20 and the Internet 30, and to run this Java APP using the above-described Java Runtime Environment. In the present embodiment, the Java APP causes the received call notification process shown in the flowchart of Fig. 4 to be executed in the terminal device 10. Specifically, the terminal device 10 executing the Java APP displays the screen shown in Fig. 5. The terminal device 10 also displays images in a region 520 of this screen as desired by the user, and is waiting for a call. If a call is then received, the latest received call number is acquired from the received call history table, and telephone directory data corresponding to the received telephone number is acquired from the telephone directory table (Fig. 2), and the received call is notified to the user by displaying the telephone directory data in the region 510 (Fig. 5)

### A - 2. Configuration of the terminal device

Next, the hardware configuration of the terminal device 10 will be described with reference to Fig. 6. As shown in Fig. 6, the terminal device 10 comprises a control unit 610, a display unit 620, an operating unit 630, a wireless communication unit 640, a storage unit 650 and a bus 660 acting as an interface for data transfer between each of these structural elements.

The control unit 610 is a CPU (central processing unit) for example, and controls each unit of the terminal device 10 by executing software stored in the storage unit 650. The display unit 620 is, for example, a liquid crystal display and a drive circuit for the liquid crystal display, and displays images according to image data outputted from the control unit 610. The operating unit 630 is provided with a plurality of operating elements to allow a user to input numbers, characters, operating instructions etc., and delivers data corresponding to the operation content of these operating elements to the control unit 610.

The wireless communication unit 640 is provided with an antenna (not shown in the figures), and performs wireless communication with base station 21 which constitutes a wireless cell within range of the terminal device 10. The wireless communication unit 640 receives data transmitted from a base station 21 and outputs the received data to the control unit 610, and also transmits data delivered from the control unit 610 to the base station.

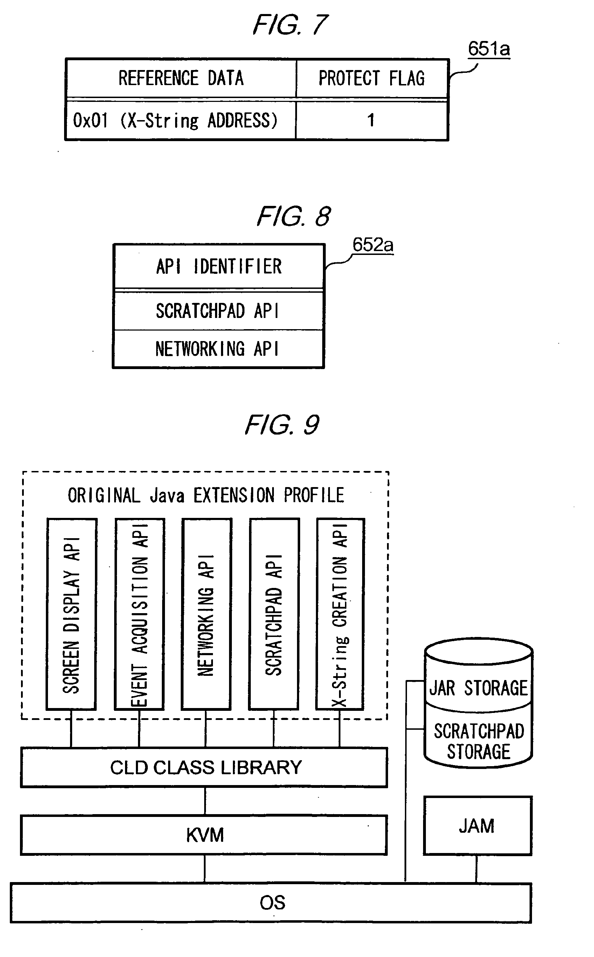

The storage unit 650 has a volatile storage unit 651 and a non-volatile storage unit 652. The volatile storage unit 651 is RAM (Random Access Memory), for example, and is used as a work area by the control unit 610 during execution of a software program. The data management table 651a shown in Fig. 7 is written to the volatile storage unit 651 during execution of a Java APP. A protect flag having a value of "0" or " 1 is stored in this data management table 651a, corresponding to data (hereafter called reference data) uniquely specifying an object created during execution of the Java APP. In this embodiment, an address representing a storage position of an object in the volatile storage unit 651 is used as "reference data". Also, the protect flag represents whether data included in the object is data that requires security protection. In this embodiment, data that does not require security protection is included in an object corresponding to a protect flag whose value is "0", while data that requires security protection is included in an object corresponding to a protect flag whose value is "1".

The non-volatile storage unit 652 is an EEPROM (Electrically Erasable Programmable Read Only Memory), for example, and stores the protect flags previously associated with each item of data possessed by a user using the terminal device 10. For example, protect flags indicating that security protection is required are associated with private information such as a telephone directory table (Fig. 2) or a received call history table (Fig. 3). Protect flags indicating that security protection is not required are associated with other information such as data of images created by a user. In the case that security is protected for all data stored in the non-volatile storage unit 652, it is not necessary to associate the protect flags.

In addition, the command management table 652a shown in Fig. 8 is stored in the non-volatile storage unit 652. This command management table 652a will be described in detail later. Also, OS (Operating System) software and native APPs to create a Java Runtime Environment are stored in the non-volatile storage unit 652. As one example of a native APP, there is a telephone directory management APP for causing telephone directory data stored in the telephone directory table to be displayed to a user or updated by a user, etc.

Also, although detailed illustration has been omitted, a storage region for storage of Java APP that has been downloaded from the content server 40 is provided in the non-volatile storage unit 652 for each Java APP. A JAR (Java ARchive) for the Java APP is stored in this storage region. A JAR file is a single file combining the program body of the Java APP (a program written in Java bytecode), with image files containing image data and audio files containing audio data that will be used when this program is run.

### A - 3. Java Runtime Environment

Next, software built into the terminal device 10 to create a Java Runtime Environment will be described with reference to Fig. 9. Fig. 9 is a block diagram describing a Java Runtime Environment in the terminal device 10. As shown in Fig. 9, software for implementing a Java Runtime Environment conforming to J2ME (Java 2 platform Micro Edition) is incorporated into the terminal device 10. Here, J2ME is a Java Runtime Environment standard directed to small electronic devices. As shown in Fig. 9, the software for implementing J2ME includes KVM, CLDC (Connected Limited Device Configuration) class libraries, original Java extension profiles, and JAM (Java Application Manager). Although detailed description has been omitted, the terminal device 10 has maker-unique extension libraries as well as the CLDC class libraries and the original Java extension profiles described above. The maker-unique extension library is a class library used by a manufacturer of the terminal device 10 to provide unique functions. Also, although a description is provided for this embodiment based on applying the present invention to a terminal device 10 having a Java Runtime Environment conforming to J2ME, it is obviously also possible to apply the present invention to a terminal device having a Java Runtime Environment conforming to J2SE (Java2 Standard Edition) or J2EE (Java2 Enterprise Edition). J2SE is a Java Runtime Environment standard directed to PC, while J2EE is a Java Runtime Environment standard directed to server devices such as, for example, the content server 40.

First, a description will be given of the CLDC class library and the original Java extension profiles. The CLDC class library is a class library for providing general purpose functions directed to small electronic devices such as mobile phones and PDAs (Personal Digital Assistants). The original Java extension profiles are class libraries for providing specialized functions in the terminal device 10 relating to this embodiment, based on the CLDC class library. These original Java extension profiles in code include, for example, a screen display API (Application Program Interface), an event acquisition API, a networking API, a scratchpad API and an X-String formation API, etc. The control unit 610 during execution of a Java APP can use functions provided by these APIs by calling the APIs in accordance with Java bytecode constituting the Java APP. In the specifications and drawings, "API" is equivalent to a class (program)

The screen display API is an API for supporting display of images on the display unit 620. The event acquisition API is an API for supporting notification of the occurrence of events, such as call receipt and operation command input to the operation unit 630, to the control unit 610 during execution of a Java APP. The networking API is an API for access to a network resource (for example, the content server 40) specified by a URL (Uniform Resource Locator). The scratchpad API is an API for supporting reading and writing to and from a scratchpad. Detailed illustration of the scratchpad has been omitted, but this is a storage region provided for each Java APP within the non-volatile storage region 652, and stores data generated as a result of execution of the Java APP.

The X-string creation API is an API for allowing data stored in the non-volatile storage unit 652 to be used in the control unit 610 during execution of a Java APP. The X-string creation API of this embodiment is an API for allowing telephone directory data stored in the telephone directory table to be used in the control unit 610 during execution of a Java APP. More specifically, as a result of the X-String API being called, an X-string object is created including telephone directory data corresponding to the latest received call telephone number, and the object is stored in the volatile storage unit 651. In addition, a protect flag (namely, "1") associated with reference data of the X-string object and associated with telephone directory data included in the X-string object is stored in the data management table 651a (refer to Fig. 7). Here, the X-string object is created by deleting comparison methods and data length notification methods from methods included in general string objects storing character strings. A comparison method is a method for comparing delivered character string data and character string data included in a String object, and for notifying an originator of the comparison result. The data length notification method is a method for notifying an originator of data length (for example, number of characters) of a character string included in a String Object. The reason that the X-String object does not have such methods is that there is a possibility that the content of character data included in the X-string object will be estimated, as a result of these methods being called. In this embodiment, description is provided for a case where the security of character string data is protected using an X-String object, but the present invention is not limited to being applied to character strings. For example, it is also obviously possible to apply the present invention to integer type data and floating point type data.

By calling the X-String creation API, reference data for an X-String object including the latest received call telephone number data is delivered to the control unit 610. Then, by calling the screen display API described above with this reference data as an argument, the control unit 610 can cause display of telephone directory data included in the X-string object represented by this reference data on the display unit 620. In this embodiment, description is provided for a case where telephone directory data corresponding to the latest received call telephone number is included in an X-String object, but obviously it is also possible to include only a part of the telephone directory data (for example, only telephone numbers included in this telephone directory data, or only called party identifier). The data also includes private information of the user.

Here, referring to Fig. 8 again, the command management table 652a will be described. Of the various APIs described above, an identifier specifying the networking API (for example, the name of the networking API: hereafter referred to as "API Identifier") and an API identifier for the scratchpad API are stored in the command management table 652a. As is described above, the control unit, during execution of a Java APP, can transmit data to a CP by calling the networking API. Also, the control unit 610 can write data to the scratchpad and freely operate on data stored in the scratchpad by calling the scratchpad API. That is, these APIs are APIs for which there is a possibility that data subject to operation will be accessible from outside of the terminal device 10. In this way, API identifiers for specifying APIs for which operations on data requiring security protection is inappropriate, that is, APIs whose execution must be controlled in the terminal device 10to protect security of important data such as private information, are stored in the command management table 652a. API identifiers stored in the command management table 652a are not limited to API identifiers for the networking API and the scratchpad API. For example, an API identifier for an API performing a cast process (hereafter referred to as a "cast API") may be stored in the command management table 652a. A cast process is an API for converting a particular object to an object of another type. If this type of cast process is performed, it becomes possible to convert an X-String object to a String object, which conversion may be performed because there is a possibility that it will become impossible to protect security of telephone directory data included in an X-String object.

KVM is one type of JVM, and is designed for use with small electronic devices such as mobile phones and PDAs. JVM converts Java bytecode constituting a Java APP to instruction code capable of being interpreted by the control unit 610 (for example, machine code for the control unit 610), and causes the instruction code to be executed in the control unit 610. KVM performs interpretation and execution of Java bytecode in one embodiment of the present invention when interpreting and executing Java bytecode constituting the Java APP.

Specifically, KVM determines whether or not Java bytecode to be executed is Java bytecode for the purpose of calling an API whose execution is restricted in this terminal device 10, based on stored content of the above-described command management table 652a (Fig. 8). If it is determined that the Java bytecode to be executed is Java bytecode for calling an API whose execution is restricted, KVM further determines whether data operated by the API is data requiring security protection, based on the stored content of the above-described data management table 651a (Fig. 7). In a case that the data is determined to be data requiring security protection, interpretation and execution of the Java bytecode is not performed. The terminal device 10 of this embodiment thus prevents leakage of data of the terminal device 10 that should be security protected, and thus security of the data is ensured.

Referring to Fig. 9 again, JAM is software for carrying out management of Java APPs stored in the terminal device 10, under control of the OS. Specifically, to carry out Java APP management, the control unit 610 in accordance with JAM implements a function for installing or deleting Java APPs, a function for displaying names of Java APPs stored in the non-volatile storage unit 652 in a list, and a function for carrying out execution management of Java APPs.

The function for carrying out execution management of Java APPs is a function for carrying out launch and termination of Java APP execution. More specifically, if Java APP execution is directed by the user, the control unit 610 first reserves a work area for execution of the Java APP in the volatile storage unit 651 in accordance with JAM. Data developed by the Java bytecode, constituting the Java APP the user has instructed to run and data input by the user during execution of this Java APP, are stored in this work area. Next, the storage unit 610 expands the Java bytecode constituting the Java APP into the work area reserved inside the volatile storage unit 651, and then interprets and executes the Java bytecode in accordance with KVM. If the user then instructs termination of the Java APP, the control unit 610 terminates interpretation and execution of the Java bytecode using KVM, releases the work area secured in the volatile storage unit 651 for execution of the Java APP, and terminates the Java APP.

### B. Operation

Next, an operation in accordance with this embodiment will be described. In the following, description will be given of the operation, highlighting the features of the terminal device of this embodiment.

### B - 1. First Operation Example: Java APP execution operation

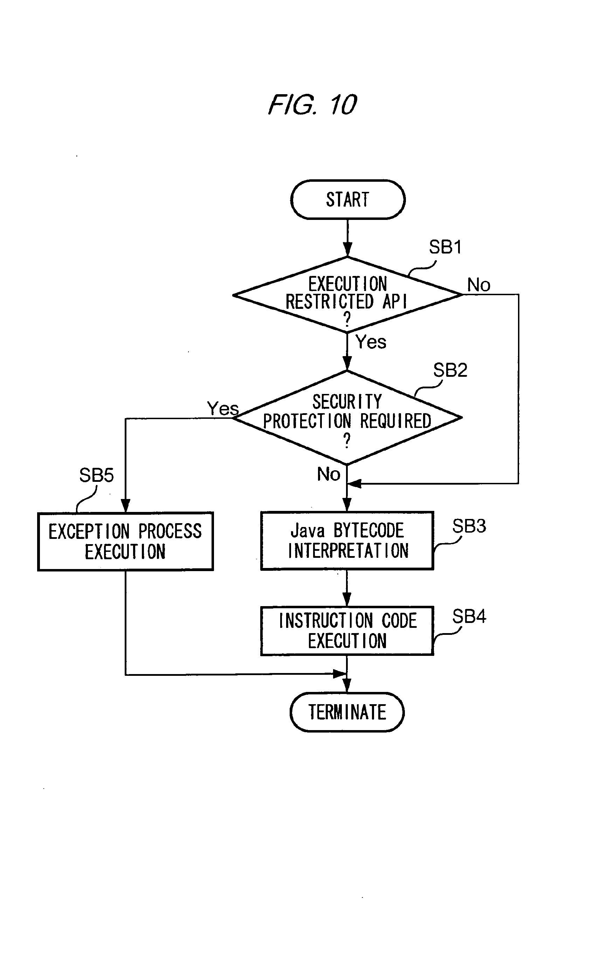

If Java APP execution is instructed by the user, the control unit 610 expands the Java byte code constituting this Java APP into the volatile storage unit 651 in accordance with JAM. The control unit 610 then runs the Java APP by interpreting and executing this Java bytecode in accordance with KVM. For example, when the Java APP for implementing the incoming call notification process shown in Fig. 4 is executed, the control unit 610 interprets and executes Java bytecode for implementing each of steps SA1 - SA5 in accordance with KVM in each of those steps. In the following, first of all, description is given for the operations of the control unit 610 interpreting and executing the Java bytecode to be executed in accordance with KVM in each of the steps SA1 - SA5 (Fig. 4), with reference to Fig. 10.

Fig. 10 is a flowchart showing flow of operations for interpreting and executing a Java APP to be run by the control unit 610 in accordance with KVM. As shown in Fig. 10, the control unit 610 first determines whether or not the Java bytecode to be executed is Java bytecode for the purpose of calling an API whose execution is restricted, based on stored content of the command management table 652a (Fig. 8) (step SB1). Specifically, when an API identifier for an API that is called by interpretation and execution of the Java bytecode is stored in the command management table 652a, the control unit 610 determines that it is Java bytecode for calling an API whose execution is restricted. Conversely, when the API identifier is not stored in the command management table 652a, the control unit 610 determines that it is not Java bytecode for calling an API whose execution is restricted.

If the determination result in step SB1 is "NO", the control unit 610 interprets the Java bytecode to be executed and converts it into instruction code (step SB3). Conversely, if the determination result in step SB1 is "YES", the control unit 610 further determines whether data that would be accessed using an API called by the Java bytecode to be executed is data requiring security protection, based on stored content of the data management table 651a (Fig. 7) (step SB2). Specifically, when a protect flag indicating that security protection is required (namely, "1"), is associated with reference data representing the data, the control unit 610 determines that it is data requiring security protection, while if a protect flag indicating that security protection is not required (namely, "0") is associated with the reference data, the control unit 610 determines that it is data that does not require security protection.

If the determination result in step SB2 is "NO", the control unit 610 performs the above-described step SB3 and executes the instruction code obtained in step SB3 (step SB4). Conversely, if the determination result in step SB2 is "YES", the control unit carries out an exception process (step SB5). An example of this exception process is informing the user of a notification indicating that there is a possibility that the Java APP is instructed to carry out an illegal operation. In this embodiment, description has been given for a case where, with respect to Java bytecode for calling an API whose execution is restricted, interpretation and execution of the Java bytecode are not carried out in a case that data operated on by the API is data requiring security protection. However, the exception process may be carried out when the data that requires security protection is accessed after the Java bytecode is interpreted and executed.

In this embodiment, as shown in Fig. 4, since there is no Java bytecode for calling an API whose execution is restricted included in this Java APP, in each of steps SA1 - SA5, the above steps SB3 and SB4 are executed. Thus Java bytecode implementing each of these steps is executed.

Referring to Fig. 4 again, description will now be given for an incoming call notification process implemented by the control unit 610 executing Java bytecode included in the Java APP. As shown in Fig. 4, the control unit 610 first calls the screen display API, to cause display of the screen shown in Fig. 5 on the display unit 620 (step SA1), and then calls the event acquisition API to determine whether there is an incoming call (step SA2). If the determination result of step SA2 is "NO", the control unit 610 then executes the process of step SA5, which will be described later. Conversely, if the determination result in step SA2 is "YES" the control unit 610 calls the X-String creation API to acquire reference data for an X-String object including the telephone directory data for the incoming call (step SA3).

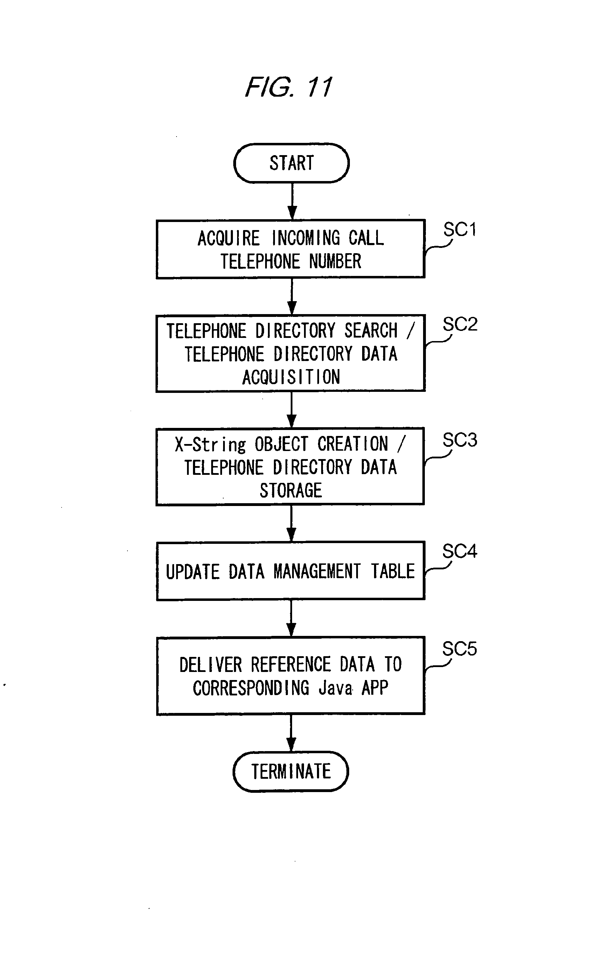

Here, description will be given for the telephone directory data acquisition process executed by the control unit 610 during execution of the X-String creation API called in step SA3, with reference to Fig. 11. Fig. 11 is a flowchart showing flow of a telephone directory data acquisition process. As shown in Fig. 11, the control unit 610 first acquires the latest received telephone number from the incoming call history table (refer to Fig. 3) (step SC1), and then acquires telephone directory data including a telephone number that is the same as the acquired incoming call telephone number from the telephone directory table (refer to Fig. 2) (step SC2).

Next, the control unit 610 creates an X-string object including the telephone directory data acquired in step SC2 (step SC3). Then, the control unit 610 associates reference data for this X-string object with a protect flag for telephone directory data included in this X-String object and stores the reference data and the protect flag in the data management table 651a (step SC4).

The control unit 610 then calls the reference data of the X-string object created in step SC3, and delivers the reference data to the corresponding Java APP. Then the control unit 610 terminates the X-string creation API (step SC5).

Referring to Fig. 4 again, the control unit 610 that has acquired reference data for the X-String object including telephone directory data for the incoming call, by calling the X-String creation API in step SA3, delivers that reference data to the display unit 620, and the telephone directory data included in the X-String object represented by this reference data is displayed in the region 510 of the screen shown in Fig. 5 (step SA4). B - 2. Second Operation example: Operation for executing a Java APP calling an API whose execution is restricted

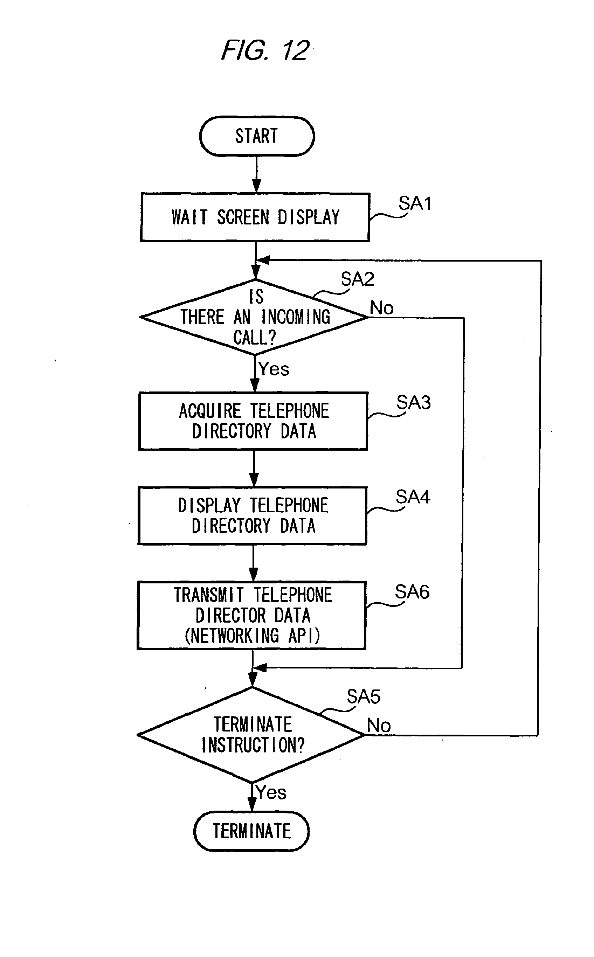

Next, description will be given for a case where a Java APP implementing the incoming call notification process shown in Fig. 12 is executed by the control unit 610. The only difference between the incoming call notification process shown in Fig. 12 and the incoming call notification process shown in Fig. 4 is that the incoming call notification process shown in Fig. 12 includes step SA6. Step SA6 is a step for transmitting the called party identifier acquired in step SA3 to the content provider 40 providing the Java APP, using the networking API. That is, when an incoming call is received, the Java APP implementing the incoming call notification process shown in Fig. 12 is provided from a malicious CP, and steals telephone directory data of the incoming call and transmits it to the content server 40. Even in a case that this type of Java APP is run, steps other than step SA6 can be executed in the same way as the incoming call notification process shown in Fig. 4. Therefore, description of operation of the control unit 610 for these steps will be omitted, and description will only be given for the operation of the control unit 610 when interpreting and executing Java bytecode for implementing step SA6 in accordance with KVM, with reference to Fig. 12.

Java bytecode for implementing step SA6 (refer to Fig. 12) is Java bytecode for calling the networking API, and so the determination result in step SB1 described above is "Yes" (refer to Fig. 8 and Fig. 10), and the control unit carries out the process of step SB2 described above.

Since data transmitted to the content server 40 using the networking API is telephone directory data, the result of determination in step SB2 described above will be "YES", and the control unit 610 will perform the above-described exception process (step SB5). As a result, the Java bytecode for implementing step SA6 (refer to Fig. 12) is not executed, and theft of the telephone directory data is prevented.

As has been described above, it is possible to use important data stored in a terminal device 10 during execution of a non-native APP, and it is also possible to ensure security of this important data.

### C. Modifications

The present invention is not limited to the above embodiment, and various modifications are possible within the technical scope of the invention. As modified examples the following can be considered, for example.

### C - 1 First Modification

In the above-described embodiment, an APP constituted by Java bytecode is described as an example of a non-native APP, but the programming language for describing the non-native APP is not limited to Java. Other programming languages (for example, C++, or C) may also be used. Generally, an APP written in these programming languages is converted to instruction code at the time of its provision. In such a case, instead of KVM described above, it is necessary to store a program for carrying out an operation in accordance with the flowchart shown in Fig. 10 in the terminal device 10. Since an APP provided in this way is already made up of instruction code, there is no need to carry out the process of step SB3.

### C - 2 Second Modification

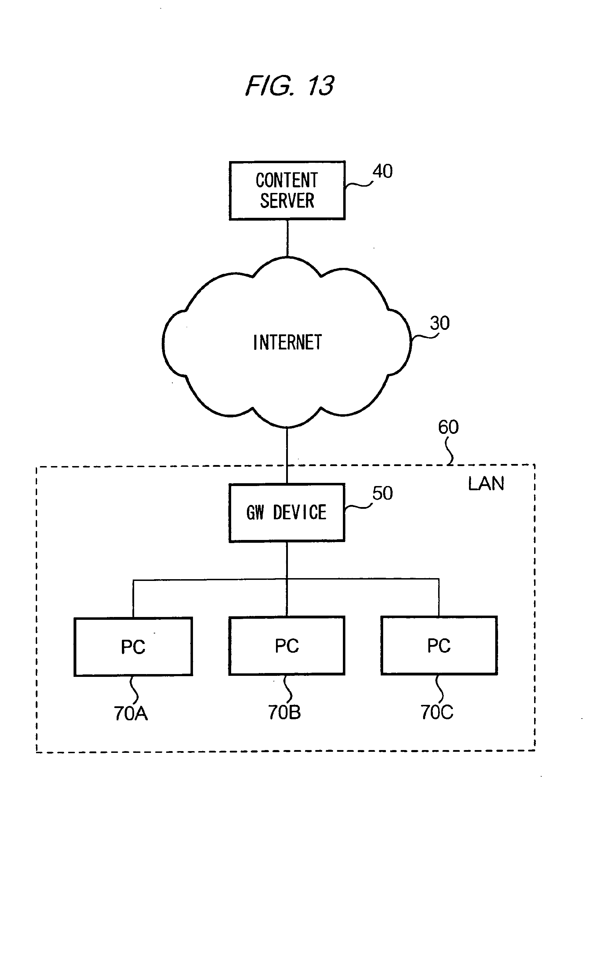

In the above described embodiment, description is provided for a case where the present invention is provided in a mobile phone having a Java Runtime Environment. Most mobile phones are used to store private data such as a telephone directory table and a received call history table, which means that highly beneficial effects are obtained when applying the present invention. However, application of the present invention is not limited to mobile phones. For example, it can also be applied to a PDA or PHS (Personal Handyphone System) terminal provided with a Java Runtime Environment. Furthermore, it can also be applied to a PC having a Java Runtime Environment, for example, PC70A - 70C making up a LAN 60 connected to the Internet via a GW device, as shown in Fig. 13. In short, any device is possible as long as it is a computer device provided with a Java Runtime Environment, and having a function for executing Java APPs.

### C - 3. Third Modification

In the above-described embodiment, a Java APP downloaded via the Internet was described as an example of a non-native APP. However, non-native APPs installed in the terminal device 10 are not limited to downloaded Java APPs. Non-native APPs may be, for example, Java APPs stored on a storage medium capable of being read by a computer device, such as a CD-ROM, and distributed.

With APPs provided via the Internet and APPs distributed stored in storage media, if the content of an APP is examined by an unbiased third party organization such as a communication proprietor managing a mobile packet communications network or a CA (Certificate Authority), and it is an APP recognized to satisfy specified operational standards (hereafter referred to as a trusted APP), there is no need to restrict resources that can be accessed, as with a native APP.

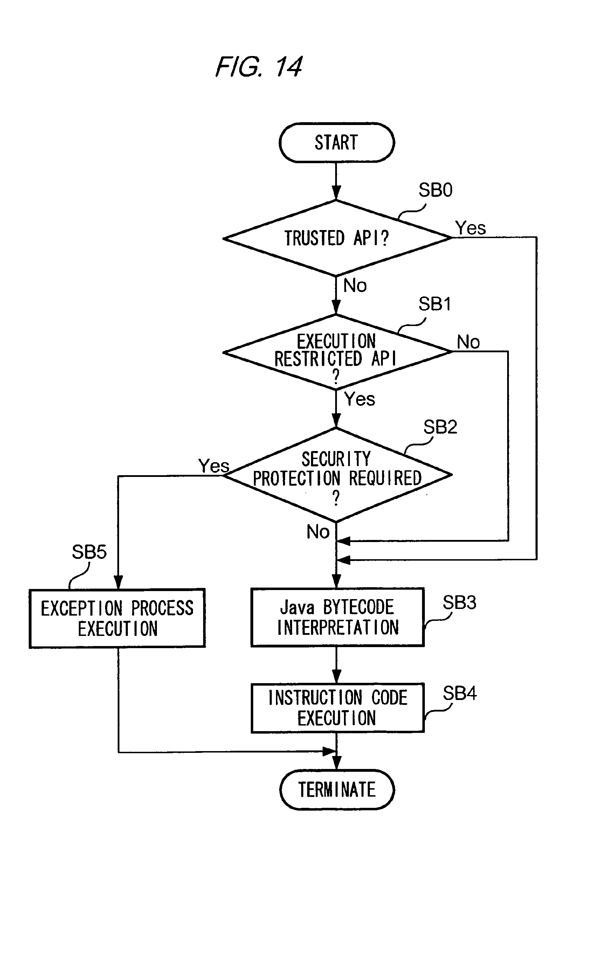

For example, with a trusted APP, the APP itself contains identification information indicating that it is a trusted APP, and it is also possible to execute the Java bytecode interpret and execute operations shown in Fig. 14 in the control unit 610. The only difference between the Java bytecode interpreting and execution operation shown in Fig. 14 and the Java bytecode interpreting and execution operation shown in Fig. 10 is that step SB0 is carried out before the above-described step SB1. In step SB0, the control unit 610 determines whether or not the Java APP to be run is a trusted APP. Specifically, the control unit 610 determines that the Java APP is a trusted APP only if the above-described identification information is included in the Java APP to be run. If the determination result is "YES" in step SB0, the control unit 610 unconditionally executes the above-described step SB3, and interprets and executes the Java bytecode constituting this Java APP. This is because with a trusted APP, since it is recognized that no operations that will inconvenience the user will be carried out, it is not necessary to restrict access types to resources during execution of this Java APP.

### C - 4 Fourth Modification

In the above-described embodiment, description is provided of a case where software for implementation of functions specific to the terminal device of the present invention, such as the X-String creation API and KVM, are pre-stored in the terminal device. However, it is also possible to store this software in a storage medium that can be read by a computer device, and to impart the same functions as those of the terminal device to a standard computer by installing the software in the computer device using this storage medium.

## Claims

1. A terminal device, comprising:
first storage means for storing data;
execution means for executing instruction code in accordance with an application program;
second storage means for storing data for specifying, among instruction codes that can be executed by the execution means, instruction codes whose execution is restricted in the terminal device;
determination means for determining whether an instruction code executed by the execution means in accordance with an application program is a restricted instruction code, based on a stored content of the second storage means; and
prevention means for preventing execution of the instruction code by the execution means when it is determined by the determination means that execution of an instruction code is restricted, and at least a part of the data will be accessed by execution of the instruction code.

2. The terminal device according to claim 1, wherein the determination means further determines whether instruction code executed in accordance with the application code is instruction code whose execution is restricted based on stored content of the second storage means, only in a case where the application program executed by the execution means is an application program for which it is not confirmed that the application program will not carry out operations that are inconvenient to a user.

3. The terminal device according to claim 1, wherein:
the terminal device further comprises communication means for communicating via a communications network; and
the determination means determines whether instruction code executed in accordance with the application code is instruction code whose execution is restricted based on stored content of the second storage means, only in a case that the application program executed by the execution means is an application program acquired via a communications network using the communication means.

4. The terminal device according to claim 1, wherein:
the first storage means stores identifiers representing whether data requires security protection, in association with the data; and
the prevention means prevents execution of the instruction code by the execution means when it is determined by the determination means that there is instruction code whose execution is restricted, and that if the instruction code is used at least some data stored in the first storage means associated with an identifier for protecting security will be accessed by the instruction code.

5. A program product for causing a computer device storing data and restriction data for identifying instruction code whose execution is restricted, to execute the steps of:
executing instruction code in accordance with an application program;
determining whether an instruction code executed by the execution means in accordance with an application program is a restricted instruction code, based on stored content of the computer; and
preventing execution of the instruction code by the execution means when it is determined by the determination means that execution of an instruction code is restricted, and at least some of the data will be accessed by execution of the instruction code.
